Europäisches Patentamt

European Patent Office

Office européen des brevets

(11) Publication number: **0 190 415**
**A1**

# (12) EUROPEAN PATENT APPLICATION

(21) Application number: **85114459.2**

(22) Date of filing: **14.11.85**

(51) Int. Cl.⁴: **F 16 H 3/54**
**F 01 P 7/04, F 02 B 67/04**

(30) Priority: **10.12.84 US 679965**

(43) Date of publication of application:
**13.08.86 Bulletin 86/33**

(84) Designated Contracting States:
**DE FR GB IT**

(71) Applicant: **Canadian Fram Limited**
**540 Park Avenue East P.O. Box 2014**
**Chatham Ontario N7M 5M7(CA)**

(72) Inventor: **Anderson, Andrew Gordon c/o CANADIAN**
**FRAM LIMITED**
**540 Park Avenue East P.O. Box 2014**
**Chatham Ontario, N7M 5M7(CA)**

(74) Representative: **Brullé, Jean et al,**
**Service Brevets Bendix 44, rue François 1er**
**F-75008 Paris(FR)**

(54) **Two speed accessory drive.**

(57) An accessory drive (10) comprising a planetary gear set (12) drivingly connected to an output member (84). The drive includes means (110, 142) for moving a pressure plate into contact with and for rotationally engaging the output pulley and for drivingly connecting the output pulley directly to the input member; and

means (56) for stopping the counterrotation of the ring gear (18) of the planetary gear set relative to the direction of the rotation of the input member (20) during conditions when the pressure plate is disengaged from the output pulley.

Fig-1

## TWO SPEED ACCESSORY DRIVE

## BACKGROUND AND SUMMARY OF THE INVENTION

The invention is related to clutching devices generally and more specifically to an engine driven apparatus for driving at least one vehicle mounted accessory at either one of two selectable speeds.

United States Patent 2,959,070 is illustrative of an accessory drive employing a planetary gear set for driving an output pulley at preselected speeds. Prior accessory drives have rotated an output member and the accessories connected thereto at the speed of the engine or at an increased speed thus reducing useful life of the drive and often generating an unacceptable level of accoustic whine.

It is an object of the present invention to provide a variable speed clutched drive employing a one-way brake and a speed reducing planetary gear set. A further object of the present invention is to provide means for performing the clutching function in a simple manner. Accordingly the invention comprises:

A two speed accessory drive having a plurality of operating conditions in which an ouput member or pulley is rotated at the speed of an input or driving member or at a reduced speed ratio relative thereto. The drive comprises a planetary gear set comprising a sun gear, a plurality of planet gears connect to an output pulley and a ring gear wherein the sun gear is connected to the input member and is driven by the input member. A pressure plate is rotationally fixed and axially movably relative to the input member and urged out of engagement with the output pulley by a spring. The drive further includes means for moving the pressure plate into contact with and for rotational engagement with the output pulley and for drivingly connecting the output pulley directly to the input member and means for stopping the counterrotation of the ring gear relative to the direction of the rotation of the input member during conditions when the pressure plate is disengaged from the output pulley.

## DETAILED DESCRIPTION OF THE DRAWINGS

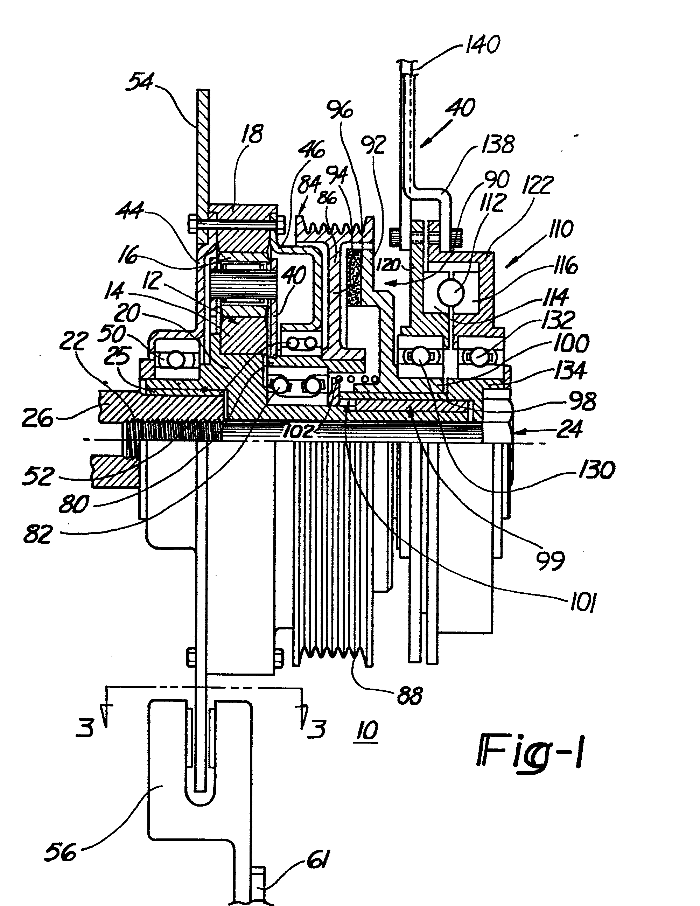

Reference is now made to the accompanying FIGURES which illustrate a two-speed accessory drive 10 illustrating the present invention. The drive 10 incorporates a speed reducing planetary gear set generally indicated as 12 comprising a sun gear 14, a plurality of planet gears 16 positioned in surrounding relation relative to the sun gear and a ring gear 18 positioned in driving relation about the plurality of planet gears. FIGURE 1 illustrates but one of the planet gears 16, such construction being known to one familiar with the art.

The sun gear 14 is mounted to and rotates with an input member 20 which as illustrated in FIGURE 1 supports a number of other components of the drive. The input member 20 is driven by the crank shaft 26 of the engine by means of key 25. A bolt 24 having a threaded shaft 24 interconnects the crankshaft 26 and input member 20. The planet gears 16 are connected to a planet carrier 40 which is connected to an axially extending hub 80 concentric to the input member 20. The ring gear 18 is positioned by housing members 44 and 46 which are isolated from the input member 20 by bearings 50 and 52. The housing members 44 and 46 define a lubrication cavity for oil or the like. Oil is retained by seals associated with the bearings or by separate seals (not shown). The ring gear 18 is attached to a disc 54 which passes through a braking device generally illustrated as 56. In the embodiment of the invention as described herein, the braking device is a one-way brake.

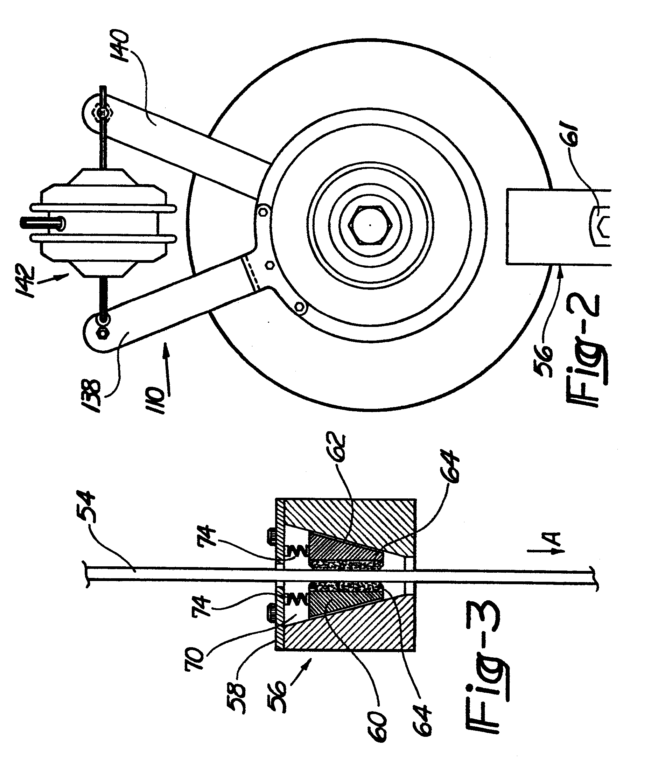

Reference is briefly made to FIGURE 3 which illustrates the interrelationship of a one-way brake 56, and the disc 54. The brake 56 consists of a housing 58 holding two tapered blocks, 60 and 62, which may be covered by or bonded to layers of friction material generally designated as 64. The blocks 60 and 62 are fitted within a tapered cavity 70 of a housing 58. Springs 74 may be utilized to urge the tapered blocks 60 and 62 into the narrowing portion of the tapered cavity 70. Alternatively, depending upon the mounting of the brake 56, the springs 74 may be eliminated and the tapered blocks 60 and 62 would be urged towards the narrow end of the tapered cavity by gravity or a combination of springs and gravity. The housing 58 is preferably mounted to the engine block by means of a suitable bracket. The taper of the cavity 70 and of the blocks 60 and 62 is set so that the disc 54 cannot rotate in the direction designated as "A" while being free to rotate in an opposite direction.

Returning to FIGURE 1 it can be seen that the planet carrier 40 extends radially downward from the planet gears and is attached to the hub 80 which is rotationally supported relative to the input member 20 by a bearing 82, such as the double race bearing shown in the FIGURE. The hub 80 supports an output pulley 84. The pulley 84 comprises a radially extending portion or member 86 which terminates at a pulley face 88. The drive further includes a clutch or pressure plate 90 which includes a radially situated circumferential flange 92 which supports a circumferentially positioned pad of friction material 94. The friction material is positioned for engagement with an engagement surface 96 on the radially extending member 86. Alternatively, the friction material 94 could be carried by the member 86. The friction material 94 is shown apart from surface 96 as shown in FIGURE 1. The clutch plate 92 is connected to the input member 20 through splines 98, or the like which are made to rotate with the input 20 by means of key 99 received in keyway 101, to permit an axially extending base portion or sleeve 100 of the clutch plate 92 to move axially relative to the input member 20 and to rotate with it. A spring 102 positioned interior to the hub 80 biases the clutch plate 92 axially outwardly or away from the pulley 84.

The pressure plate 90 is clutched or moved into contact with the pulley by the operation of an actuator 110. One such actuator is of a ball ramp variety which includes a plurality of balls 112 supported by a plurality of ramps 114 and 116 in a known manner. The ramps 114 and 116 are each supported by their respective ramp support members 120 and 122. These ramp support members are rotationally isolated from the input member 20 by means of the thrust bearings 130 and 132. More specifically, the bearing 130 supports the ramp support member 120 relative to the base 100 of the pressure plate 90 while the bearing 132 supports the other ramp support member 122 relative to a spacer 134 secured relative to the input member 20 by means of key 99.

The ramp support members 120 and 124 are connected to respective levers 138 and 140 which are more clearly illustrated in FIGURE 2. Lever 138 is secured against rotation to the engine by appropriate bracket means (not shown). The lever 140 is movable relative thereto by an actuator, generally designated as 142, such as a vacuum actuator.

Reference is again made to FIGURE 1 which illustrates the clutch plate 92 in a disengaged or declutched mode with such clutch plate 92 biased axially outwardly by the spring 102. In this operating condition the output pulley 84 is driven through the speed reducing planetary gear set 12 and, more particularly, the output pulley 84 is driven through the sun gear 14, the planet gears 16, the planet carrier 40 and hub 80. In this declutched mode of operation, the ring gear 18 will have a tendency to rotate in a direction opposite the direction of rotation of the input shaft. The ring gear rotation is conveniently halted by reaction with the one-way brake 56. Having restrained the ring gear 18 from undesired rotation, the output pulley 84 will thereafter rotate at a reduced ratio relative to the speed of the input member. When it is desired to increase the speed of the output pulley 84, the lever 140 is moved by the actuator 142. The movement of lever 140 causes a relative rotation of the ramp support members 120 and 124 and a corresponding relative motion between the ramps 114 and 116 causing the ramp 114, the ramp support 120 and thrust bearing 130 to move axially inward. This movement of the thrust bearing 130 causes the clutch plate 92 and friction material 94 to move into contact with the engagement surface 96 of the output pulley 84. In this operating condition, the sun gear 14, the planet gears 16 by virtue of their connection to the hub 80 will rotate at the speed of the input shaft. In addition, during this operating condition, the ring gear 18 will tend to rotate at the speed and in the direction of the input member thus freeing itself from the clamping or braking action of the one-way brake 56.

Many changes and modifications in the above-described embodiment of the invention can of course be carried out without departing from the scope thereof. Accordingly, that scope is intended to be limited only by the scope of the appended claims.

Claims:

1.      A two speed accessory drive (10) having a plurality of operating conditions in which an output member or pulley (84) is rotated at the speed of an input or driving member (20) or at a reduced speed ratio relative thereto; the drive (10) comprises:

a planetary gear set (12) comprising a sun gear (14), a plurality of planet gears (16) and a ring gear (18) wherein the sun gear is connected to the input member and is driven by said input member and its planet gears are drivingly connected to the output pulley (84),

a pressure plate (90) rotationally fixed and axially movable relative to the input member,

spring means (102) for urging said pressure plate (90) out of engagement with said output pulley (84),

means (110, 142) for moving said pressure plate into contact with and for rotational engagement with said output pulley and for drivingly connecting said output pulley directly to said input member; characterized in that said drive comprises:

means (56) for stopping the counterrotation of said ring gear (18) relative to the direction of the rotation of said input member (18) during conditions when said pressure plate is disengaged from said output pulley.

2.      The drive (10) as defined in Claim 1 characterized in that said stopping means comprises a disc (54) rotationally fixed to said ring gear (18) and isolated from said input member and means for selectively inhibiting the rotation of said disc (54).

3.      The drive (10) as defined in Claim 2 characterized in that said inhibiting means comprises a one-way brake (56).

4.      The drive (10) as defined in Claim 2 characterized in that said moving means comprises a ball ramp actuator (110).

5. The drive (10) as defined in Claim 4 characterized in that said ball ramp actuator (110) comprises a plurality of ramp support structures (120, 124) rotationally isolated from the rotation of the input member and rotationally movable one relative to the other, said ramp support structure (120, 124) supporting means for moving said pressure plate axially in response to the relative rotation of said support members.

6. The device as defined in Claim 5 characterized in that said moving means includes a lever attached to each of said ramp support structure and means for moving said levers relative to one another.

Fig-1

54

70  74  74

58

56

60  62

64

64

Fig-3

A

142

138

110

140

56

Fig-2

61

2/2

0190415

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | EP-A-0 093 044 (CANADIAN FRAM LTD.) <br> * Abstract * | 1,3 | F 16 H 3/54 <br> F 01 P 7/04 <br> F 02 B 67/04 |
| | --- | | |
| Y | BE-A- 672 071 (VEB ELEKTRO WERKZEUGE) <br> * Page 3, line 21 - page 4, line 3; figures 1-4 * | 1,3 | |
| | --- | | |
| A | FR-A- 823 798 (DE NORMANUILLE) | | |
| | --- | | |
| A | US-A-3 763 978 (CROOKS) | | |
| | --- | | |
| A | US-A-2 943 517 (MARKLEY) | | |
| | --- | | TECHNICAL FIELDS SEARCHED (Int Cl.4) |
| A | GB-A-2 091 357 (BORG-WARNER) | | |
| | --- | | F 16 H <br> F 01 P <br> F 02 B |
| A | EP-A-0 128 311 (CANADIAN FRAM LTD.) | | |
| | --- | | |
| A,D | US-A-2 959 070 (FLINN) | | |
| | ----- | | |

The present search report has been drawn up for all claims

| Place of search | Date of completion of the search | Examiner |
|---|---|---|
| THE HAGUE | 23-05-1986 | BEERNAERT J.E. |